(19) **Europäisches Patentamt**

**European Patent Office**

**Office européen des brevets**

(11) **EP 1 247 556 B1**

(12) **EUROPEAN PATENT SPECIFICATION**

(45) Date of publication and mention
of the grant of the patent:
**30.03.2005 Bulletin 2005/13**

(51) Int Cl.7: **B01D 46/00**, B01D 53/86,
B01J 35/04, F01N 3/28,
B01D 53/88, F01N 3/022

(21) Application number: **01900654.3**

(22) Date of filing: **11.01.2001**

(86) International application number:
**PCT/JP2001/000077**

(87) International publication number:
**WO 2001/051174 (19.07.2001 Gazette 2001/29)**

(54) **TRIANGULAR CELL HONEYCOMB STRUCTURE**

HONIGWABENSTRUKTUR MIT DREIECKIGEN ZELLEN

STRUCTURE A NID D'ABEILLES AVEC ALVEOLES TRIANGULAIRES

(84) Designated Contracting States:
**BE DE FR**

(30) Priority: **13.01.2000 JP 2000005064**

(43) Date of publication of application:
**09.10.2002 Bulletin 2002/41**

(73) Proprietor: **NGK INSULATORS, LTD.**
**Nagoya-City Aichi 467-8530 (JP)**

(72) Inventors:
• **HARADA, Takashi NGK Insulators, Ltd.**
**Nagoya-city Aichi 467-8530 (JP)**
• **MIYAIRI, Yukio NGK Insulators, Ltd.**
**Nagoya-city Aichi 467-8530 (JP)**

(74) Representative: **Paget, Hugh Charles Edward**
**Mewburn Ellis LLP**
**York House**
**23 Kingsway**
**London WC2B 6HP (GB)**

(56) References cited:
EP-A- 1 101 910          WO-A-95/06510
JP-A- 3 121 213          JP-A- 9 158 710
JP-A- 2000 279 729       US-A- 4 276 071
US-A- 4 329 162          US-A- 4 335 023
US-A- 4 417 908          US-A- 5 914 187

• **PATENT ABSTRACTS OF JAPAN vol. 015, no. 321 (M-1147), 15 August 1991 (1991-08-15) -& JP 03 121213 A (IBIDEN CO LTD), 23 May 1991 (1991-05-23)**

## Description

Technical Field

The present invention relates to a honeycomb structure useful for example as a filter which collects and removes particulate matters exhausted in a heat engine such as an internal combustion engine or combustion equipment such as a boiler.

Background Art

Conventionally, as a method for collecting and removing particulate matters contained in a dust-containing fluid such as exhaust gas emitted from a diesel engine or the like, there is known the use of a honeycomb structure in which a wall of through channel has a filtering function, one end is clogged at predetermined through channels, and the other end is clogged at the remaining through channels.

In the case where such a honeycomb structure is used as a filter for collecting particulate matters in exhaust gas, it is necessary to perform regenerating treatment in which accumulating carbon particulates are burned and removed. At this time, a local increase in temperature is unavoidable, so that a high thermal stress is liable to occur, which poses a problem in that a crack is liable to develop.

As measures for reducing the thermal stress occurring in such a structural part, a method in which the structural part is divided into small segments is known. The use of a honeycomb structure for collecting particulates in exhaust gas has already been proposed in JP-A-6-241017, JP-A-8-28246, JP-A-7-54643, JP-A-8-28248, etc.

However, even in the examples proposed in the aforementioned patent publications, the effect of reducing stress on segment surface is insufficient, and the problem of crack development cannot be solved completely.

Also, as other measures for reducing thermal stress, there has been proposed a method in which a portion liable to have a relatively low temperature is heated electrically by providing an electric heater between the segments to make the temperature distribution in honeycomb structure uniform. However, this method has a problem of the occurrence of a new thermal stress because a local temperature gradient rather increases in the vicinity of the electric heater.

Further, since a wall is used as a filter, the pressure loss of fluid is excessive, which poses a problem in that the engine performance is deteriorated.

US 4329162 teaches a filter in the form of a honeycomb monolith body with thin porous walls defining cells extending therethrough from an inlet face to an outlet face. The cells are divided into two groups: an inlet group whose cells are closed adjacent the outlet face and open at the inlet face, and an outlet group whose cells are closed adjacent the inlet face and open at the outlet face. Square-section cells are stated to be preferred, though triangular cells are mentioned. Cell densities of at least 7.75/cm$^2$ are used.

US 5914187 describes a ceramic structural body having a plurality of through-holes arranged in a longitudinal direction, wherein the end faces of the through-holes are blocked at each end in a checkered pattern. A plurality of such structural bodies may be adhered together to form a filter.

The present invention has been made to solve the above problems, and accordingly an object thereof is to provide a honeycomb structure in which a less thermal stress occurs during the use; durability such that no crack develops is ensured and the pressure loss of fluid is low.

Disclosure of the Invention

According to the present invention, there is provided a honeycomb structure as set out in claim 1.

Also, in the honeycomb structure in accordance with the present invention, the honeycomb structure is preferably constructed so that the honeycomb segments are of a shape such that a cylindrical shape is divided into substantially six equal parts by planes parallel with the flow path direction, and the thickness of the wall is preferably 0.32 mm or smaller.

Further, in the honeycomb structure in accordance with the present invention, a cell density is preferably not lower than 15.5 cells/cm$^2$ and lower than 54.3 cells/cm$^2$, and the Young's modulus of material of the joint layer is preferably 20% or less of the Young's modulus of material of the honeycomb segment.

In the present invention, a portion having an area of at least 30% of the surface area of the honeycomb segment in contact with the joint layer preferably has average surface roughness Ra exceeding 0.4 micron, and the ratio of the total heat capacity of all the joint layers in the honeycomb structure to the total heat capacity of all the honeycomb segments constituting the honeycomb structure is preferably 30% or lower.

Further, in the honeycomb structure in accordance with the present invention, it is preferable that a corner portion of a cross-sectional shape of the honeycomb segment in the cross section perpendicular to the through channel of the honeycomb structure be rounded with a radius of curvature of 0.3 mm or larger, or be chamfered by 0.5 mm or more.

Also, the ratio of the total cross-sectional area of the joint layers to the cross-sectional area of the honeycomb structure in the cross section perpendicular to the through channel of the honeycomb structure is preferably 15% or lower, and further the ratio of the sum of the cross-sectional areas of the joint layers to the sum of the cross-sectional areas of the walls in the cross section of honeycomb structure perpendicular to the through channel of the honeycomb structure is preferably 50% or lower. Still further, it is preferable that the ratio of the cross-sectional area of joint layer to the cross-sectional area of wall in the cross section of honeycomb structure perpendicular to the through channel of the honeycomb structure be higher in the central portion and be lower on the outer peripheral side.

As a material of the honeycomb segment, one of cordierite, SiC, SiN, alumina, mullite, and lithium aluminum silicate (LAS) is preferably used as a main crystal phase from the viewpoint of strength, heat resistance, and the like.

Also, it is preferable that the honeycomb segment carry a metal having a catalytic function so as to be used to purify exhaust gas from a heat engine or combustion equipment or to reform a liquid fuel or a gas fuel. As the metal having a catalytic function, at least one kind of Pt, Pd, and Rh is preferably used.

Brief Description of the Drawings

Figures 1(a), 1(b) and 1(c) are views showing one embodiment of a honeycomb structure in accordance with the present invention, Figure 1(a) being a front view, and Figures 1(b) and 1(c) being partially enlarged views of Figure 1(a).

Figures 2(a), 2(b) and 2(c) are views showing one embodiment of a honeycomb structure in accordance with the present invention, Figure 2(a) being a front view, Figure 2(b) being a side view, and Figure 2(c) being a partially enlarged view of Figure 2(a).

Figure 3 is a sectional view for illustrating one example of a honeycomb structure.

Figure 4 is a partially enlarged view showing a cell construction and a joint layer of a honeycomb structure.

Best Mode for Carrying out the Invention

The present invention will now be described in further detail with reference embodiments. The present invention is not limited to these embodiments.

The present invention relates to a honeycomb structure which has a large number of through channels which are partitioned by walls and penetrate in the axial direction, the wall of the flow having a filtering function, and is constructed so that one end is blocked at predetermined through channels, and the other end is blocked at the remaining through channels, and is characterized in that the through channel has a triangular cross-sectional shape, and moreover the density of through channel is below 54.3 cells/cm$^2$.

One feature of the honeycomb structure in accordance with the present invention is that the through channel has a triangular cross-sectional shape. The inventor carried out various studies, and resultantly found that in the honeycomb structure having the above-described construction, a triangular cell is suitable for decreasing the flow pressure loss of fluid.

Conventionally, a settled view has been that in the honeycomb structure having no closure on the end face, the pressure loss of fluid in a flow path relates to the hydraulic diameter of a cross-sectional shape of through channel, and since the pressure loss increases as the hydraulic diameter decreases, a triangular cell shape provides a higher pressure loss than a quadrangular, hexagonal or more polygonal, or circular cell shape.

On the other hand, in the case where the construction is such that one end is blocked for predetermined through channels, and the other end is blocked for the remaining through channels, and a wall is used as a filter as in the present invention, in addition to the flow pressure loss in the flow path, flow resistance is produced when the fluid passes through the wall, so that the relationship between the pressure loss and the through channel shape (cell shape) is complicated.

The inventor carried out studies on this respect earnestly, and resultantly found that in the comparison under the condition of the same opening area or the same cell density, the triangular shape has a larger filtration area than the quadrangular or more polygonal cell shape, and accordingly the velocity of fluid passing through the wall can be kept low, and the flow resistance when the fluid passes through the wall is kept low; however, in a region in which the through channel density (cell density) is high and the cross-sectional area of through channel is small, the ratio of the flow resistance in the flow path to the flow resistance of fluid passing through the wall increases, so that the triangular shape has a higher total pressure loss.

Further, as the result of advanced studies, the inventor found that in the case where the through channel density (cell density) is lower than 54.3 cells/cm$^2$ (350 cells/in$^2$), the triangular cell having low flow resistance of fluid passing through the wall produces a lower total pressure loss than the quadrangular or more polygonal shape, and reached the present invention.

Also, if the cell density of honeycomb structure is lower than 15.5 cells/cm$^2$ (100 cells/in$^2$), the filtration area is insufficient and the pressure loss is high. Therefore, the cell density is preferably 15.5 cells/cm$^2$ or higher.

Also, in the present invention, the honeycomb structure has a circular, elliptical, racetrack-like, or polygonal cross-sectional shape, and have an outer peripheral face parallel with the flow path direction; the honeycomb structure have a construction in which honeycomb segments including the outer peripheral face of a shape such that the cross-sectional shape is divided into an integer of n by planes parallel with the flow path direction are combined via joint layers; and the cell shape of each of the honeycomb segments be triangular, and the angle of one corner of the triangle coincide with 1/m (m is an integer) of the angle that the faces in contact with the joint layers of each of the honeycomb segments make.

By this configuration, in the vicinity of an external wall in contact with the joint layer of honeycomb segment, a cell wall parallel with the honeycomb segment external wall can be arranged. Therefore, stress concentration in a joint portion of the honeycomb segment external wall and the wall can be prevented.

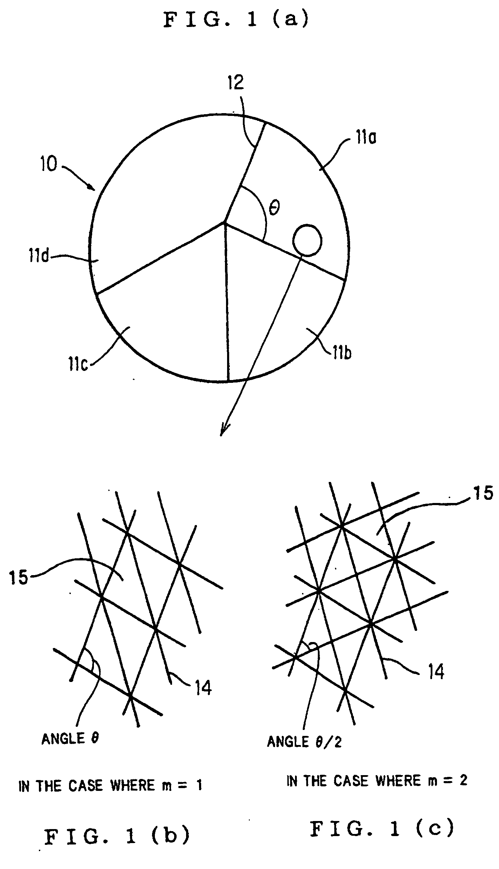

The above-described configuration will be explained with reference to the drawings. Figures 1(a), 1(b) and 1 (c) are views showing one embodiment of a honeycomb structure in accordance with the present invention, Figure 1 (a) being a front view, and Figures 1(b) and 1(c) being partially enlarged views of Figure 1(a).

As seen from Figure 1(a), a honeycomb structure 10 has a circular cross-sectional shape and has an outer peripheral face parallel with the flow path direction. This honeycomb structure 10 has a construction in which honeycomb segments 11a, 11b, 11c and 11d including the outer peripheral face of a shape such that the cross-sectional shape is divided into four by planes parallel with the flow path direction are combined via joint layers 12.

It is preferable that, as shown in Figures 1(b) and 1(c), the cell shape of each of the honeycomb segments 11a, 11b, 11c and 11d be triangular, and the angle θ of one corner of the triangle coincide substantially with 1/m of the angle Θ that the faces in contact with the joint layers 12 of each of the honeycomb segments 11a, 11b, 11c and 11d make. Herein, m is an integer, preferably m = 1 to 4.

Figure 1(b) shows the case where m = 1, and Figure 1(c) shows the case where m = 2. In the figures, reference numeral 14 denotes the wall, and 15 denotes the through channel.

Further, it is further preferable that the honeycomb structure in accordance with the present invention be constructed so that honeycomb segments of a shape such that a cylindrical shape is divided into substantially six equal parts by planes parallel with the flow path direction are combined into a cylindrical shape via the joint layers. The reason for this is as described below.

By the above-described construction, the radial wall and the external wall in contact with the joint portion of honeycomb segment can be set in parallel, so that stress concentration in the joint portion of the segment external wall and the wall can be prevented.

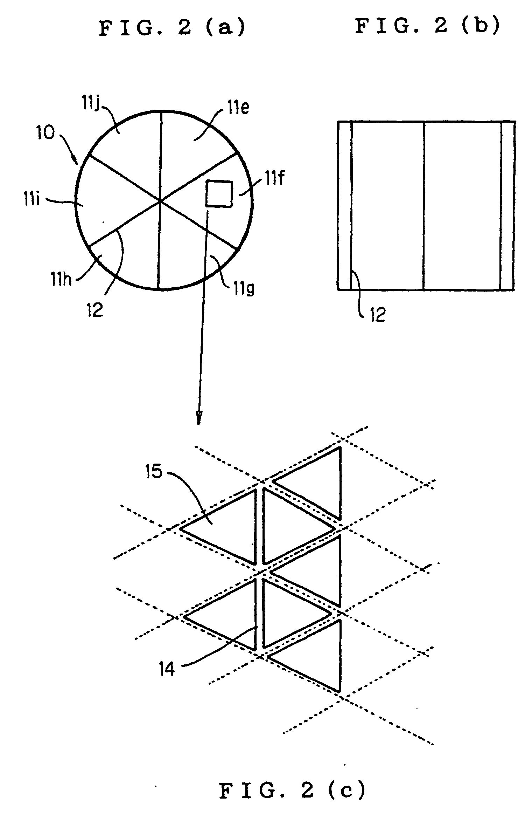

This construction will be explained with reference to the drawings. Figures 2(a), 2(b) and 2(c) are views showing one embodiment of the above-described honeycomb structure in accordance with the present invention, Figure 2 (a) being a front view, Figure 2(b) being a side view, and Figure 2(c) being a partially enlarged view of Figure 2(a).

The honeycomb structure 10 is constructed so that honeycomb segments 11e, 11f, 11g, 11h, 11i and 11j of a shape such that a cylindrical shape is divided into substantially six equal parts by a plane parallel with the flow path direction are combined into a cylindrical shape via the joint layers 12. The cell shape of each of the honeycomb segments 11e, 11f, 11g, 11h, 11i and 11j is triangular, and the angle θ of one corner of the triangle coincides with 1/m (m = 1) of the angle Θ that the faces in contact with the joint layers 12 of each of the honeycomb segments 11e, 11f, 11g, 11h, 11i and 11j make.

Also, since the outer peripheral face (external shape) formed by combining the honeycomb segments as the honeycomb structure is of a cylindrical shape as described above, a holding force from the outer periphery can be transmitted uniformly to the inside. Also, by a synergetic effect obtained by the fact that the triangular cell has lower isotropy of force transmission than the quadrangular cell, uneven distribution of local stresses can be prevented.

In the honeycomb structure in accordance with the present invention, the thickness of wall is preferably 0.32 mm or smaller, further preferably in the range of 0.20 to 0.30 mm from the viewpoint of reduction in the flow resistance of fluid passing through the cell wall.

Also, in the honeycomb structure in accordance with the present invention, the Young's modulus of a material forming the joint layer is preferably 20% or less, more preferably 1% or less, of the Young's modulus of a material forming the honeycomb segment. By specifying the materials of the joint layer and the honeycomb segment, a honeycomb structure in which a less thermal stress occurs during the use, and durability such that no crack develops is ensured can be provided.

Also, it is preferable that in this honeycomb structure, a portion having an area of at least 30% of the surface area of the honeycomb segment in contact with the joint layer have average surface roughness Ra exceeding 0.4 micron. Thereby, the honeycomb segments are joined more firmly, and a fear of peeling off at the time of use can almost be dispelled. The aforementioned surface roughness Ra is further preferably be 0.8 microns or more.

Further, the ratio of the total heat capacity of all the joint layers in the honeycomb structure to the total heat capacity of all the honeycomb segments constituting the honeycomb structure is made 30% or lower, preferably 15% or lower, by which a thermal stress occurring during the use is desirably made less, and durability such that no crack develops in the honeycomb structure is desirably ensured.

Further, it is preferable that in the honeycomb structure in accordance with the present invention, a corner portion of a cross-sectional shape of honeycomb segment in the cross section perpendicular to the through channel of honeycomb structure be rounded with a radius of curvature of 0.3 mm or larger, or be chamfered 0.5 mm or more because the occurrence of thermal stress at the time of use is reduced and great durability such that no crack develops can be given to the honeycomb structure.

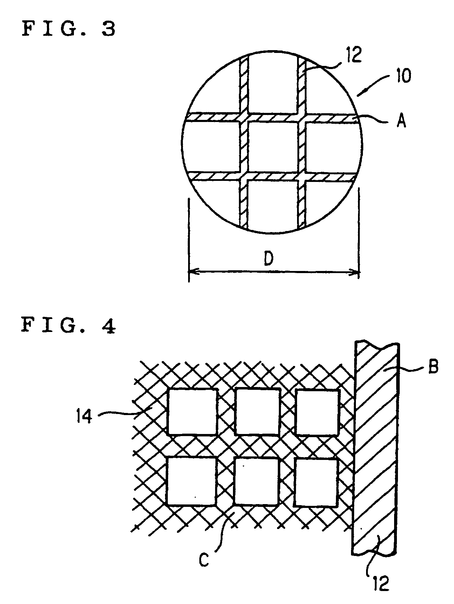

Further, in the present invention, it is preferable that the ratio of the total cross-sectional area of the joint layers to the cross-sectional area of the honeycomb structure in the cross section perpendicular to the through channel of honeycomb structure be 17% or lower, more preferably 8% or lower. The explanation of this is given with reference to Figure 3. Referring to Figure 3, in the circular honeycomb structure 10 having a cross section with diameter D, the total cross-sectional area $S_H$ of the honeycomb structure 10 is expressed by the following formula.

$$S_H = (\pi/4) \times D^2$$

On the other hand, the total cross-sectional area $S_S$ of the joint layers 12 is the total area of hatched portion A in Figure 3 (cross-sectional portion of the joint layers 12).

Herein, the ratio of $S_S/S_H$ should preferably be 17% or lower from the viewpoint of the decrease in pressure loss of fluid.

Further, in the present invention, it is preferable that the ratio of the sum of the cross-sectional areas of joint layers to the sum of the cross-sectional areas of walls in the cross section of honeycomb structure perpendicular to the through channel of honeycomb structure be 50% or lower, more preferably 24% or lower. Referring to Figure 4, taking the sum of the cross-sectional areas (hatched portion B) of the joint layers 12 in the cross section of the honeycomb structure 10 as $S_S$, and taking the sum of the cross-sectional areas (meshed portion C) of the walls 14 as $S_C$, the ratio of $S_s/S_c$ should preferably be 50% or lower from the viewpoint of the decrease in pressure loss of fluid.

Further, in the present invention, it is preferable that the ratio of the cross-sectional area of joint layer to the cross-sectional area of wall in the cross section of honeycomb structure perpendicular to the through channel of honeycomb structure be higher in the central portion and be lower on the outer peripheral side. Because of the joint layers closer to each other at the center and more apart from each other at the periphery, the quantity of collected carbon particulates per unit volume is smaller in the vicinity of the center than in the vicinity of the outer periphery, so that at the time of regenerating treatment at which carbon particulates are burned (regenerative combustion time), the calorific value in the vicinity of the center, where high temperatures are liable to be generated, can be kept low. Moreover, the joint layer in the vicinity of the center is dense, so that the heat capacity in that portion can be increased. For these reasons, the increase in temperature in the vicinity of the center can be kept low. As a result, a difference in temperature between the central portion and the outer peripheral side can be decreased, so that the thermal stress in the honeycomb structure can desirably be decreased.

Also, the honeycomb segment constituting the honeycomb structure in accordance with the present invention preferably has a main crystal phase of one kind selected from a group consisting of cordierite, SiC, SiN, alumina, mullite, and lithium aluminum silicate (LAS) from the viewpoint of strength, heat resistance, and the like. Silicon carbide (SiC), which has a high coefficient of thermal conductivity, is especially preferable because heat can be dissipated easily.

As a material of joint layer that joins the honeycomb segment to each other, ceramic fiber, ceramic powder, cement, or the like, which has heat resistance, are preferably used singly or by being mixed. Further, as necessary, an organic binder, an inorganic binder, etc. may be used by being mixed. The material of joint layer is not limited to the above-described materials.

The honeycomb structure in accordance with the present invention has a construction such that, as described above, it has a large number of through channels which are partitioned by walls and penetrate in the axial direction; the wall of the through channel has a filtering function; and one end is blocked at predetermined through channels, and the other end is blocked at the remaining through channels. Therefore, the honeycomb structure can be suitably used as a filter which collects and removes particulate matters contained in a dust-containing fluid, such as a particulate filter for a diesel engine.

Specifically, if a dust-containing fluid is caused to pass through one end face of the honeycomb structure having such a construction, the dust-containing fluid enters a through channel in the honeycomb structure whose end on the one end face side is not blocked, and passes through the porous wall having a filtering function to enter another through channel in the honeycomb structure whose end on the other end face side is not blocked. When passing through the wall, particulate matters in the dust-containing fluid are collected to the wall, and the purified fluid from which particulate matters have been removed is discharged from the other end face of honeycomb structure.

If the collected particulate matters accumulate on the wall, the wall is clogged, so that the function as a filter decreases. Therefore, the honeycomb structure is heated periodically by heating means such as a heater to burn and remove the particulate matters, by which the filtering function is regenerated. To accelerate the combustion of particulate matters at the time of regeneration, a metal having a catalytic function, as described later, may be carried on the honeycomb segment.

On the other hand, in the case where the honeycomb structure in accordance with the present invention is used to purify exhaust gas from a heat engine such as an internal combustion engine or to reform a liquid fuel or a gas fuel as a catalyst carrier, a metal having a catalytic function is carried on the honeycomb segment. As a typical metal having a catalytic function, Pt, Pd, and Rh are cited. At least one kind of these metals is preferably carried on the honeycomb segment.

Hereunder, the present invention will be described in further detail with reference to examples. The present invention is not limited to these examples.

[Example]

A honeycomb structure measuring 144 mm in diameter and 153 mm in length having a construction such that the honeycomb segments 11e, 11f, 11g, 11h, 11i and 11j of a shape such that a cylindrical shape is divided into six equal parts by a plane parallel with the flow path direction are combined into a cylindrical shape via the joint layers 12 as shown in Figures 2(a), 2(b) and 2(c) was manufactured using a SiC-made honeycomb segment having a wall thickness of 0.300 mm, a cell density of 240 cells/in$^2$ (37.2 cells/cm$^2$), and a thickness of outer peripheral portion of 0.5 mm, and using a mixture of ceramic fiber, ceramic powder, and organic and inorganic binders as the joint layer. The properties of the obtained honeycomb structure are given in Table 1. Also, the surface roughness given in Table 1 indicates the average surface roughness of the whole surface of honeycomb segment in contact with the joint layer.

This honeycomb structure is a particulate filter for purifying exhaust gas from a diesel engine, which has a construction such that one end is blocked at predetermined through channels, and the other end is blocked at the remaining through channels. The fluid pressure loss test and the regeneration test were conducted on these honeycomb structures. The results are given in Table 1.

[Table 1]

| | |
|---|---|
| Young's modulus of wall material (Gpa) | 42 |
| Young's modulus of joint layer material (Gpa) | 8 |
| Young's modulus of joint layer/Young's modulus of wall (%) | 19 |
| Segment corner | R0.3 |
| Result of regeneration test | Good, no crack |
| Segment surface roughness (Ra μm) | 0.8 |
| Axial shift after test | No |
| Wall thickness (mm) | 0.3 |
| Joint layer thickness (mm) | 2 |
| Joint layer area/structure area (%) | 5.3 |
| Joint layer area/wall area (%) | 12.5 |
| Result of fluid pressure loss test | Allowable range |
| Regeneration time | Allowable range |
| Heat capacity ratio (%) | 7.5 |

[Evaluation]

As is apparent from the results given in Table 1, when the requirements specified in the present invention were satisfied, the pressure loss of fluid was not so high, being within the allowable range (10 kPa), and the regeneration time was within the allowable range (15 min).

Industrial Applicability

As described above, the honeycomb structure in accordance with the present invention achieves a remarkable effect that a less thermal stress occurs during the use; durability such that no crack develops is ensured; and moreover the pressure loss of fluid is low. Therefore, the honeycomb structure in accordance with the present invention can be used suitably as a filter which collects and removes particulate matters exhausted in a heat engine such as an internal combustion engine or combustion equipment such as a boiler.

**Claims**

1.  A honeycomb structure (10) having an outer peripheral face parallel with a flow path direction, and a circular, elliptical, racetrack-like or polygonal cross-sectional shape transverse to said flow path direction; and
    a large number of through channels (15) each with a triangular cross-sectional shape, which are partitioned by walls (14) and penetrate in said flow path direction;
    wherein:

    the walls (14) of said through channels (15) have a filtering function;
    the density of said through channels (15) is below 54.3 cells/cm$^2$; and
    the honeycomb structure (10) is constructed so that one end is blocked at predetermined through channels (15), and the other end is blocked at the remaining through channels (15) ;
    the honeycomb structure (10) is divided into a plurality of separate honeycomb segments (11a-11j) by joint layers (12) joining the segments to each other and extending from the outer peripheral face along planes parallel with the flow path direction; and
    the angle of one corner of each of the triangular through channels (15) in each segment (11a-11j) is substantially 1/m (where m is an integer) of the angle between the joint layers (12) bounding that segment (11a-11j).

2.  The honeycomb structure according to claim 1 wherein the honeycomb structure (10) has a cylindrical shape and there are six said segments (11a-11j) dividing the shape into substantially six equal parts.

3.  The honeycomb structure according to claim 1 or claim 2 wherein the thickness of said walls (14) is 0.32 mm or smaller.

4.  The honeycomb structure according to any one of claims 1 to 3, wherein the cell density is from 15.5 to below 54.3 cells/cm$^2$.

5.  The honeycomb structure according to any one of claims 1 to 4 wherein the Young's modulus of the material of said joint layers (12) is 20% or less of the Young's modulus of the material of said honeycomb segments (11a-11j).

6.  The honeycomb structure according to any one of claims 1 to 5 wherein a portion having an area of at least 30% of the surface area of each said honeycomb segment (11a-11j) in contact with said joint layers (12) has an average surface roughness Ra exceeding 0.4 micron.

7.  The honeycomb structure according to any one of claims 1 to 6, wherein the ratio of the total heat capacity of all the joint layers (12) in said honeycomb structure (10) to the total heat capacity of all the honeycomb segments (11a-11j) constituting said honeycomb structure (10) is 30% or lower.

8.  The honeycomb structure according to any one of claims 1 to 7, wherein a corner portion of the cross-sectional shape of said honeycomb segment (11a-11j) in a cross-section perpendicular to the through channel (15) of said honeycomb structure (10) is rounded with a radius of curvature of 0.3 mm or larger, or is chamfered by 0.5 mm or more.

9.  The honeycomb structure according to any one of claims 1 to 8 wherein the ratio of the total cross-sectional area of said joint layers (12) to the cross-sectional area of said honeycomb structure (10) in a cross-section perpendicular to the through channel (15) of said honeycomb structure (10) is 15% or lower.

10. The honeycomb structure according to any one of claims 1 to 9, wherein the ratio of the sum of the cross-sectional areas of said joint layers (12) to the sum of the cross-sectional areas of said walls (14) in a cross-section of honeycomb structure (10) perpendicular to the through channel (15) of said honeycomb structure (10) is 50% or lower.

11. The honeycomb structure according to any one of claims 1 to 10, wherein the ratio of the cross-sectional area of said joint layers (12) to the cross-sectional area of said walls (14) in the cross-section of honeycomb structure (10) perpendicular to the through channel (15) of said honeycomb structure (10) is higher in the central portion and is lower on the outer peripheral side,

12. The honeycomb structure according to any one of claims 1 to 11 wherein said honeycomb segments (11a-11j) have a main crystal phase selected from cordierite, SiC, SiN, alumina, mullite, and lithium aluminum silicate (LAS).

13. The honeycomb structure according to any one of claims 1 to 12, wherein said honeycomb segments (11a-11j) carry a metal having a catalytic function so as to be used to purify exhaust gas from a heat engine or combustion equipment or to reform a liquid fuel or a gas fuel.

14. The honeycomb structure according to claim 13, wherein said metal having a catalytic function is at least one of Pt, Pd and Rh.

## Patentansprüche

1. Wabenstruktur (10) mit einer äußeren Umfangsfläche, die parallel zu einer Strömungspfadrichtung ist, und mit einer quer zur Strömungspfadrichtung verlaufenden kreisförmigen, elliptischen, aschenbahnähnlichen oder polygonalen Querschnittsform; und
einer Vielzahl von Durchgangskanälen (15) mit jeweils dreieckiger Querschnittsform, die durch Wände (14) unterteilt sind und die in die Strömungspfadrichtung eindringen;
worin:

    die Wände (14) der Durchgangskanäle (15) eine Filterfunktion ausüben;

    die Dichte der Durchgangskanäle (15) unter 54,3, Zellen/$cm^2$ liegt; und

    die Wabenstruktur (10) so konstruiert ist, dass an vorbestimmten Durchgangskanälen (15) ein Ende blockiert ist und an den verbleibenden Durchgangskanälen (15) das andere Ende blockiert ist;

wobei die Wabenstruktur (10) durch Verbindungsschichten (12) in eine Vielzahl von getrennten Wabensegmenten (11a - 11j) unterteilt ist, die die Segmente miteinander verbinden und sich von der äußeren Umfangsfläche entlang parallel zur Strömungspfadrichtung stehender Ebenen erstrecken; und
der Winkel einer Ecke eines jeden dreieckigen Durchgangskanals (15) in jedem Segment (11a - 11j) im Wesentlichen 1/m (worin m eine ganze Zahl ist) des Winkels zwischen den Verbindungsschichten (12) ist, die dieses Segment (11a - 11j) begrenzen.

2. Wabenstruktur nach Anspruch 1, worin die Wabenstruktur (10) eine zylindrische Form aufweist und sechs Segmente (11a - 11j) vorliegen, die die Form in im Wesentlichen sechs gleiche Teile unterteilt.

3. Wabenstruktur nach Anspruch 1 oder 2, worin die Dicke der Wände (14) 0,32 mm oder weniger beträgt.

4. Wabenstruktur nach einem der Ansprüche 1 bis 3, worin die Zellendichte 15,5 bis weniger als 54,3 Zellen/$cm^2$ beträgt.

5. Wabenstruktur nach einem der Ansprüche 1 bis 4, worin der Elastizitätsmodul des Materials der Verbindungsschichten (12) 20 % oder weniger des Elastizitätsmoduls des Materials der Wabensegmente (11a - 11j) ausmacht.

6. Wabenstruktur nach einem der Ansprüche 1 bis 5, worin ein Abschnitt mit einer Fläche von zumindest 30 % der Oberflächenfläche eines jeden Wabensegments (11a - 11j), der in Kontakt zu den Verbindungsschichten (12) steht, eine mittlere Oberflächenrauigkeit Ra von über 0,4 Mikron aufweist.

7. Wabenstruktur nach einem der Ansprüche 1 bis 6, worin das Verhältnis der gesamten Wärmekapazität aller Verbindungsschichten (12) in der Wabenstruktur (10) zur gesamten Wärmekapazität aller Wabensegmente (11a - 11j), die die Wabenstruktur (10) bilden, 30 % oder weniger beträgt.

8. Wabenstruktur nach einem der Ansprüche 1 bis 7, worin ein Eckabschnitt der Querschnittsform des Wabensegments (11a - 11j) in einem senkrecht zum Durchgangskanal (15) der Wabenstruktur (10) stehenden Querschnitt mit einem Krümmungsradius von 0,3 mm oder größer abgerundet ist oder um 0,5 mm oder mehr abgeschrägt ist.

9. Wabenstruktur nach einem der Ansprüche 1 bis 8, worin das Verhältnis der gesamten Querschnittsfläche der Verbindungsschichten (12) zur Querschnittsfläche der Wabenstruktur (10) in einem senkrecht zum Durchgangskanal (15) der Wabenstruktur (10) stehenden Querschnitt 15 % oder weniger beträgt.

10. Wabenstruktur nach einem der Ansprüche 1 bis 9, worin das Verhältnis der Summe der Querschnittsflächen der Verbindungsschichten (12) zur Summe der Querschnittsflächen der Wände (14) in einem senkrecht zum Durchgangskanal (15) der Wabenstruktur (10) stehenden Querschnitt der Wabenstruktur (10) 50 % oder weniger beträgt.

11. Wabenstruktur nach einem der Ansprüche 1 bis 10, worin das Verhältnis der Querschnittsfläche der Verbindungsschichten (12) zur Querschnittsfläche der Wände (14) in dem senkrecht zum Durchgangskanal (15) der Wabenstruktur (10) stehenden Querschnitt der Wabenstruktur (10) im Mittelabschnitt höher ist und an der äußeren Umfangsseite niedriger ist.

12. Wabenstruktur nach einem der Ansprüche 1 bis 11, worin die Wabensegmente (11a - 11j) eine aus Cordierit, SiC, SiN, Aluminiumoxid, Mullit und Lithiumaluminiumsilicat (LAS) ausgewählte Hauptkristallphase aufweisen.

13. Wabenstruktur nach einem der Ansprüche 1 bis 12, worin die Wabensegmente (11a - 11j) ein Metall mit katalytischer Wirkung tragen, um zur Reinigung von Abgasen aus einer Wärmekraftmaschine oder Verbrennungsvorrichtung oder zum Reformieren eines flüssigen Brennstoffs oder eines gasförmigen Brennstoffs eingesetzt zu werden.

14. Wabenstruktur nach Anspruch 13, worin das Metall mit katalytischer Wirkung zumindest eines aus Pt, Pd und Rh ist.


**Revendications**

1. Structure en nid d'abeille (10) comportant une face extérieure périphérique parallèle à une direction de voie d'écoulement, et une forme circulaire, elliptique, semblable à une piste ou ayant une coupe transversale polygonale, transversale à ladite direction de voie d'écoulement ; et
un grand nombre de canaux débouchants (15) ayant chacun une forme en coupe transversale triangulaire, qui sont séparés par des parois (14) et qui pénètrent dans ladite direction de voie d'écoulement ;
dans laquelle :

les parois (14) desdits canaux débouchants (15) ont une fonction de filtrage ;
la densité desdits canaux débouchants (15) est inférieure à 54,3 cellules/cm$^2$ ; et
la structure en nid d'abeille (10) est construite de telle manière qu'une extrémité est bloquée au niveau de canaux débouchants (15) prédéterminés et l'autre extrémité est bloquée au niveau des canaux débouchants (15) restants ;
la structure en nid d'abeille (10) est divisée en une pluralité de segments en nid d'abeille séparés (11a-11j) par des couches de joint (12) qui joignent les segments les uns aux autres et s'étendant à partir de la face extérieure périphérique le long de plans parallèles à la direction de voie d'écoulement ; et
l'angle d'un coin de chacun des canaux débouchants triangulaires (15) dans chaque segment (11a-11j) est sensiblement 1/m (où m est un nombre entier) de l'angle entre les couches de joint (12) limitant ce segment (11a-11j).

2. Structure en nid d'abeille selon la revendication 1, dans laquelle la structure en nid d'abeille (10) a une forme cylindrique et il y a six dits segments (11a -11j) divisant la forme en sensiblement six parties égales.

3. Structure en nid d'abeille selon la revendication 1 ou la revendication 2, dans laquelle l'épaisseur desdites parois (14) est de 0,32 mm ou moins.

**4.** Structure en nid d'abeille selon l'une quelconque des revendications 1 à 3, dans laquelle la densité des cellules est comprise entre 15,5 et moins de 54,3 cellules/cm$^2$.

**5.** Structure en nid d'abeille selon l'une quelconque des revendications 1 à 4, dans laquelle le module de Young de la matière desdites couches de joint (12) est de 20 % ou moins du module de Young de la matière desdits segments en nid d'abeille (11a-11j).

**6.** Structure en nid d'abeille selon l'une quelconqu e des revendications 1 à 5, dans laquelle une partie comportant une zone d'au moins 30 % de l'aire de surface de chacun desdits segments en nid d'abeille (11a -11j) en contact avec lesdites couches de joint (12) a une rugosité de surface moyenne Ra dépassant 0,4 micron.

**7.** Structure en nid d'abeille selon l'une quelconque des revendications 1 à 6, dans laquelle le rapport de la capacité calorifique totale de toutes les couches de joint (12) dans ladite structure en nid d'abeille (10) à la capacité calorifique totale de tous les segments en nid d'abeille (11a-11j) constituant ladite structure en nid d'abeille (10) est de 30 % ou moins.

**8.** Structure en nid d'abeille selon l'une quelconque des revendications 1 à 7, dans laquelle une partie d'angle de la forme en coupe transversale desdits segments en nid d'abeille (11a-11j) dans une coupe transversale perpendiculaire au canal débouchant (15) de ladite structure en nid d'abeille (10) est arrondie avec un rayon de courbure de 0,3 mm ou plus, ou est chanfreinée sur 0,5 mm ou plus.

**9.** Structure en nid d'abeille selon l'une quelconque des revendications 1 à 8, dans laquelle le rapport de la surface en coupe transversale desdites couches de joint (12) à la surface en coupe transversale de ladite structure en nid d'abeille (10) dans une coupe transversale perpendiculaire au canal débouchant (15) de ladite structure en nid d'abeille (10) est de 15 % ou moins.

**10.** Structure en nid d'abeille selon l'une quelconque des revendications 1 à 9, dans laquelle le rapport de la somme des surfaces en coupe transversale desdites couches de joint (12) à la somme des surfaces en coupe transversale desdites parois (14) dans une coupe transversale de structure en nid d'abeille (10) perpendiculaire au canal débouchant (15) de ladite structure en nid d'abeille (10) est de 50 % ou moins.

**11.** Structure en nid d'abeille selon l'une quelconque des revendications 1 à 10, dans laquelle le rapport de la surface en coupe transversale desdites couches de joint (12) à la surface en coupe transvers ale desdites parois (14) dans la coupe transversale de la structure en nid d'abeille (10) perpendiculaire au canal débouchant (15) de ladite structure en nid d'abeille (10) est plus élevé dans la partie centrale et moins élevé du côté extérieur périphérique.

**12.** Structure en nid d'abeille selon l'une quelconque des revendications 1 à 11, dans laquelle lesdits segments en nid d'abeille (11a -11j) ont une phase cristalline principale sélectionnée parmi la cordiérite, le SiC, le SiN, l'alumine, la mullite et le silicate de lithium-aluminium (LAS).

**13.** Structure en nid d'abeille selon l'une quelconque des revendications 1 à 12, dans laquelle lesdits segments en nid d'abeille (11a -11j) portent un métal ayant une fonction catalytique pour être utilisés pour purifier les gaz d'échappement d'un moteur thermique ou d'un équipement de combustion ou pour reformer un carburant liquide ou un carburant gazeux.

**14.** Structure en nid d'abeille selon la revendication 13, dans laquelle ledit métal ayant une fonction catalytique est au moins l'un parmi le Pt, le Pd et le Rh.

FIG. 1 (a)

ANGLE θ

IN THE CASE WHERE m = 1

FIG. 1 (b)

ANGLE θ/2

IN THE CASE WHERE m = 2

FIG. 1 (c)

FIG. 2 (a)　　　FIG. 2 (b)

FIG. 2 (c)

FIG. 3

FIG. 4